# FASCICULE DE BREVET EUROPEEN

(11) **EP 1 621 116 B1**
(45) Date de publication et mention de la délivrance du brevet: **08.10.2008**
(21) Numéro de dépôt: 05356127.0
(22) Date de dépôt: 29.07.2005
(51) Int. Cl.: A47J 43/042

(54) **Dispositif de réalisation d'une émulsion alimentaire**
Vorrichtung zur Herstellung einer Lebensmittelemulsion
Device for the production of a food emulsion

(30) Priorité: 30.07.2004 FR 0408486
(43) Date de publication de la demande: 01.02.2006
(73) Titulaire: SANTOS, 69120 Vaulx-en-Velin (FR)
(72) Inventeur: Fouquet, Jacques, 69002 Lyon (FR); Fouquet, Nicolas, 69003 Lyon (FR)
(74) Mandataire: Schouller, Jean-Philippe

(56) Documents cités:
- US-A- 1 416 100
- US-A- 2 833 576
- US-A- 2 875 989
- US-A- 3 074 696

## Description

La présente invention concerne un dispositif de réalisation d'une émulsion alimentaire.

Le dispositif conforme à l'invention est plus particulièrement, mais non exclusivement, un appareil connu sous le nom de « shaker », destiné notamment aux bars, aux glaciers, aux hôtels ou encore aux restaurants. Cet appareil permet de réaliser des boissons à base de lait et de sirop, du type « milk shake », ainsi que des boissons du type « cocktail » alcolisées ou non, à base de lait, de glace parfumée, ou encore d'alcool.

Le dispositif de l'invention trouve cependant son application à d'autres types d'émulsions alimentaires que les boissons précitées. On citera ainsi, à titre uniquement indicatif, l'opération consistant à battre les jaunes d'oeufs.

On connaît des dispositifs de réalisation d'une émulsion alimentaire, qui comprennent un corps fixe, ainsi qu'un organe d'agitation mobile, destiné à pénétrer dans le ou les ingrédient (s) servant de base à l'émulsion. L'extrémité libre de cet organe mobile est pourvue d'un agitateur ondulé, ou encore d'un agitateur à ailettes.

De plus, US-1,416,100 décrit un dispositif comprenant toutes les caractéristiques de la revendication 1 annexée.

Ceci étant précisé, l'invention vise à proposer un dispositif permettant de réaliser des émulsions alimentaires qui soient d'une qualité améliorée par rapport à l'art antérieur, en particulier moyennant une augmentation du volume final de cette émulsion.

A cet effet, elle a pour objet un dispositif selon la revendication 1.

L'invention sera mieux comprise et d'autres avantages de celle-ci apparaîtront plus clairement à la lumière de la description qui va suivre d'un mode de réalisation d'un dispositif de réalisation d'une émulsion alimentaire conforme à son principe, donnée uniquement à titre d'exemple non limitatif et faite en référence aux dessins annexés dans lesquels :
- la figure 1 est une vue en perspective, illustrant le dispositif conforme à l'invention, dans sa position de repos ; et
- la figure 2 est une vue en perspective, analogue à la figure 1, illustrant ce dispositif dans sa position d'utilisation, à savoir associé à un récipient.

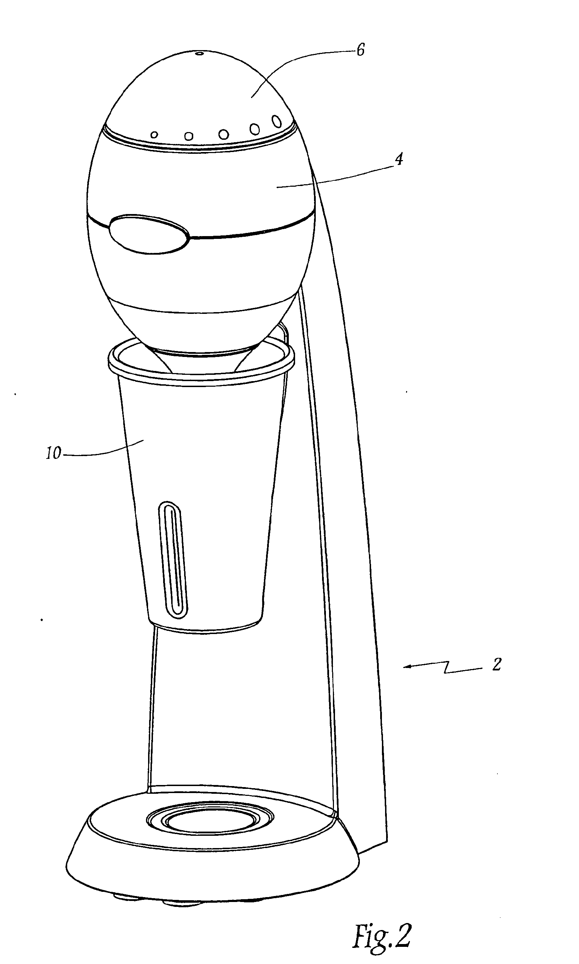

Le dispositif conforme à l'invention comporte, de façon connue en soi, un corps 2, ainsi qu'un carter supérieur 4, dans lequel est logé un moteur non représenté. Il est également prévu un régulateur 6, permettant de façon classique de changer la vitesse de rotation du moteur, ainsi qu'un support 8, propre à recevoir un récipient 10, visible sur la figure 2.

Le dispositif conforme à l'invention est par ailleurs pourvu d'un organe mobile d'agitation, désigné dans son ensemble par la référence 12. Cet organe 12, qui est propre à être entraîné en rotation par le moteur autour de son axe principal X'-X, comprend une tige 12₁, s'étendant à partir du carter, ainsi qu'une sphère 12₂ prévue à l'extrémité inférieure de la tige 12₁.

La fixation mutuelle de cette tige et de cette sphère est assurée de manière amovible, par exemple par vissage. A titre de variante, la tige et la sphère peuvent être fixées de manière permanente, en particulier par collage. A titre de variante supplémentaire, cette tige et cette sphère peuvent être réalisées d'un seul tenant.

Dans l'exemple illustré, la sphère 12₂ est lisse. Cependant, à titre de variante, elle peut être pourvue d'aspérités, dont la dimension est très nettement inférieure au diamètre global de la sphère. Dans cet exemple, la tige 12₁ possède une forme de révolution, de sorte que ses parois sont également lisses.

Cette sphère peut être réalisée en un matériau relativement dur, tel qu'une matière plastique, notamment du polycarbonate ou du polypropylène. A titre de variante, le matériau constitutif de la sphère peut être relativement souple, notamment lorsque cette dernière est pourvue d'aspérités. Dans ce cas, il s'agit par exemple d'un élastomère, tel que du caoutchouc synthétique.

A titre d'exemple non limitatif, le diamètre D de la sphère 12₂ est compris entre 10 et 60 mm, notamment entre 20 et 40 mm. Ce diamètre est par exemple voisin de 30 mm.

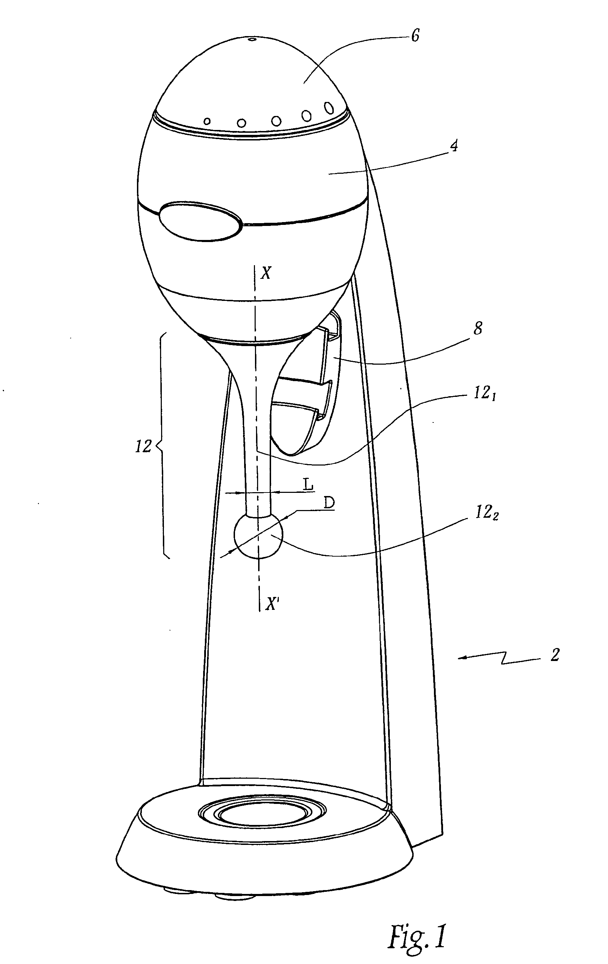

De façon avantageuse, comme cela est notamment visible sur la figure 1, ce diamètre D de la sphère 12₂ est nettement supérieur à la largeur L de la tige 12₁, cette largeur étant prise au voisinage de la tige avec la sphère. Ce rapport D/L est avantageusement compris entre 1,5 et 4, notamment entre 2 et 3.

En service, comme le montre la figure 2, il s'agit tout d'abord de placer sur le support 8 le récipient 10, qui est rempli d'au moins un ingrédient destiné à former une émulsion alimentaire. Il s'agit par exemple de lait et de sirop, destinés à former un « milk shake ».

Une fois le récipient 10 mis en place, la sphère 12₂ ainsi qu'une partie de la tige 12₁ pénètrent dans le volume intérieur du récipient 10, de manière à plonger dans les ingrédients initiaux. Puis, on fait entrer en rotation, autour de l'axe principal X'-X de la tige 12₁, l'ensemble de l'organe mobile 12.

Cette opération est réalisée à des gammes de vitesse classique, à savoir comprises notamment entre 10 000 et 15 000 tours/minute. On obtient alors une émulsion alimentaire, en l'occurrence un « milk shake », à partir des ingrédients initiaux évoqués ci-dessus.

On notera que l'homme du métier est à même de régler différents paramètres du dispositif de l'invention, afin d'optimiser la qualité de l'émulsion finale. Il s'agit notamment du diamètre de la sphère, de sa position à l'intérieur du récipient, ainsi que de la vitesse de rotation de l'organe mobile.

L'invention permet de réaliser les objectifs précédemment mentionnés.

En effet, la Demanderesse a constaté que le fait d'intégrer une sphère dans l'organe mobile d'agitation assure une amélioration substantielle de la qualité de l'émulsion ainsi obtenue. En particulier, cette émulsion présente un volume notablement plus important que celles obtenues dans l'art antérieur, à partir des mêmes quantités d'ingrédients.

Cette amélioration de la qualité de l'émulsion est tout particulièrement sensible, dans le cas où le diamètre de la sphère est nettement supérieur à la largeur de la tige. En effet, les essais réalisés dans cette configuration autorisent un volume d'émulsion supérieur d'au moins 20% à celui obtenu par les dispositifs de l'état de la technique.

Par ailleurs, l'organe mobile d'agitation de l'invention se révèle particulièrement aisé à nettoyer, notamment lorsque la sphère est fixée de façon amovible sur la tige. Enfin, cet organe mobile n'est sensiblement pas agressif pour l'utilisateur, ce qui est à comparer avec l'art antérieur faisant appel à un agitateur aux formes saillantes, notamment à ailettes. A cet égard, on notera que l'invention autorise des performances élevées, tout en garantissant une sécurité très satisfaisante, notamment dans le cas où la tige et la sphère sont lisses.

## Revendications

1. Dispositif de réalisation d'une émulsion alimentaire à partir d'au moins un ingrédient initial, comprenant un corps fixe (2), ainsi qu'un organe mobile d'agitation (12) destiné à plonger au moins en partie dans le ou chaque ingrédient initial, cet organe mobile (12) étant propre à être entraîné en rotation autour de son axe principal (X'-X), cet organe mobile (12) comprenant une tige (12₁), l'organe mobile (12) comprend également une sphère d'agitation (12₂), destinée à plonger dans le ou chaque ingrédient initial, cette sphère (12₂) étant prévue à une extrémité de cette tige (12₁), **caractérisé en ce que** le diamètre (D) de la sphère (12₂) est nettement supérieur à la largeur (L) de la tige (12₁), cette largeur étant prise au voisinage de cette tige avec la sphère.

2. Dispositif de réalisation d'une émulsion alimentaire selon la revendication 1, **caractérisé en ce que** la tige (12₁) et la sphère (12₂) sont fixées l'une à l'autre de manière amovible, en particulier par vissage.

3. Dispositif de réalisation d'une émulsion alimentaire selon la revendication 1, **caractérisé en ce que** la sphère et la tige sont fixées l'une à l'autre de manière permanente, en particulier par collage, ou sont réalisées d'un seul tenant.

4. Dispositif de réalisation d'une émulsion alimentaire selon l'une quelconque des revendications précédentes, **caractérisé en ce que** la tige (12₁) et la sphère (12₂) sont lisses.

5. Dispositif de réalisation d'une émulsion alimentaire selon l'une quelconque des revendications précédentes, **caractérisé en ce que** la sphère (12₂) est réalisée en une matière plastique, notamment du polycarbonate ou du polypropylène.

6. Dispositif de réalisation d'une émulsion alimentaire selon l'une quelconque des revendications 1 à 4, **caractérisé en ce que** la sphère est réalisée en un matériau élastomère, notamment en caoutchouc.

7. Dispositif de réalisation d'une émulsion alimentaire selon l'une quelconque des revendications précédentes, **caractérisé en ce que** la sphère (12₂) présente un diamètre (D) compris entre 10 et 60 mm, notamment entre 20 et 40 mm.

8. Dispositif de réalisation d'une émulsion alimentaire selon la revendication 7, **caractérisé en ce que** la sphère (12₂) présente un diamètre (D) voisin de 30 mm.

9. Dispositif selon l'une des revendications précédentes, **caractérisé en ce que** le rapport entre le diamètre (D) de la sphère (12₂) et la largeur (L) de la tige (12₁) est compris entre 1,5 et 4, de préférence entre 2 et 3.

## Claims

1. Device for the production of a food emulsion from at least one initial ingredient, comprising a fixed body (2) and a movable stirrer member (12), the latter being designed to be at least partially immersed in the or each initial ingredient, this movable member (12) being suitable for rotating about its principal axis (X'-X), this movable member (12) comprising a shaft (12₁), the movable member (12) also comprising a stirrer ball (12₂) designed to be immersed in the or each initial ingredient, and this ball (12₂) being located at one end of this shaft (12₁), said device being **characterized in that** the diameter (D) of the ball (12₂) is much greater than the width (L) of the shaft (12₁) , this width being measured in the vicinity of this shaft with the ball.

2. Device for the production of a food emulsion according to Claim 1, **characterized in that** the shaft (12₁) and the ball (12₂) are attached to each other removably, and in particular are screwed together.

3. Device for the production of a food emulsion according to Claim 1, **characterized in that** the ball and the shaft are attached to each other permanently, and in particular are bonded adhesively together, or are made in one piece.

4. Device for the production of a food emulsion according to any one of the preceding claims, characte-rized in that the shaft (12₁) and the ball (12₂) are smooth.

5. Device for the production of a food emulsion according to any one of the preceding claims, **characterized in that** the ball (12₂) is made of a plastics material, especially polycarbonate or polypropylene.

6. Device for the production of a food emulsion according to any one of Claims 1 to 4, **characterized in that** the ball is made of an elastomer, especially rubber.

7. Device for the production of a food emulsion according to any one of the preceding claims, **characterized in that** the diameter (D) of the ball (12₂) is from 10 to 60 mm, especially from 20 to 40 mm.

8. Device for the production of a food emulsion according to Claim 7, **characterized in that** the diameter (D) of the ball (12₂) is about 30 mm.

9. Device according to one of the preceding claims, **characterized in that** the ratio of the diameter (D) of the ball (12₂) to the width (L) of the shaft (12₁) is between 1.5:1 and A:1, and preferably between 2:1 1 and 3:1.

## Patentansprüche

1. Vorrichtung zur Herstellung einer Lebensmittelemulsion aus mindestens einer Ausgangszutat, bestehend aus einem feststehenden Körper (2) sowie einem beweglichen Rührorgan (12), das dazu bestimmt ist, mindestens teilweise in die oder jede Ausgangszutat zu tauchen, wobei dieses bewegliche Organ (12) dazu geeignet ist, um seine Hauptachse (X' - X) drehangetrieben zu werden, sowie ein Schaft (12₁) und eine Rührkugel (12₂) aufweist, die dazu bestimmt ist, in die oder jede Ausgangszutat zu tauchen, wobei diese Kugel (12₂) an einem Ende dieses Schaftes (12₁) vorgesehen ist, **dadurch gekennzeichnet, dass** der Durchmesser (D) der Kugel (12₂) wesentlich größer als die Breite (L) des Schaftes (12₁) ist, wobei die Breite gemessen ist in der Nähe des Schaftes mit der Kugel.

2. Vorrichtung zur Herstellung einer Lebensmittelemulsion nach Anspruch 1, **dadurch gekennzeichnet, dass** der Schaft (12₁) und die Kugel (12₂) lösbar miteinander verbunden sind, insbesondere mittels Schrauben.

3. Vorrichtung zur Herstellung einer Lebensmittelemulsion nach Anspruch 1, **dadurch gekennzeichnet, dass** der Schaft und die Kugel dauerhaft miteinander verbunden sind, insbesondere durch Kleben, oder einstückig sind.

4. Vorrichtung zur Herstellung einer Lebensmittelemulsion nach einem der vorhergehenden Ansprüche, **dadurch gekennzeichnet, dass** der Schaft (12₁) und die Kugel (12₂) glatt sind.

5. Vorrichtung zur Herstellung einer Lebensmittelemulsion nach einem der vorhergehenden Ansprüche, **dadurch gekennzeichnet, dass** die Kugel (12₂) aus einem Kunststoff, insbesondere aus Polycarbonat oder Polypropylen, hergestellt ist.

6. Vorrichtung zur Herstellung einer Lebensmittelemulsion nach einem der Ansprüche 1 bis 4, **dadurch gekennzeichnet, dass** die Kugel aus einem elastomeren Material, insbesondere aus Kautschuk, hergestellt ist.

7. Vorrichtung zur Herstellung einer Lebensmittelemulsion nach einem der vorhergehenden Ansprüche, **dadurch gekennzeichnet, dass** die Kugel (12₂) einen Durchmesser (D) zwischen 10 und 60 mm, insbesondere zwischen 20 und 40 mm, hat.

8. Vorrichtung zur Herstellung einer Lebensmittelemulsion nach Anspruch 7, **dadurch gekennzeichnet, dass** die Kugel (12₂) einen Durchmesser (D) von ungefähr 30 mm hat.

9. Vorrichtung zur Herstellung einer Lebensmittelemulsion nach einem der vorhergehenden Ansprüche, **dadurch gekennzeichnet, dass** das Verhältnis von Durchmesser (D) der Kugel (12₂) zur Breite (L) des Schaftes (12₁) zwischen 1,5 und 4, vorzugsweise zwischen 2 und 3, liegt.
